# EUROPEAN PATENT APPLICATION

(11) **EP 4 841 688 A1**
(43) Date of publication of application: **18.11.2026**
(21) Application number: 26177886.4
(22) Date of filing: 11.05.2026
(51) Int. Cl.: H01M 4/13, H01M 4/62, H01M 50/44, H01M 50/446, H01M 50/489

(54) **ELECTRODES FOR RECHARGEABLE LITHIUM BATTERIES AND RECHARGEABLE LITHIUM BATTERIES INCLUDING THE SAME**

(30) Priority: 16.05.2025 KR 20250064181
(71) Applicant: SAMSUNG SDI CO., LTD., Yongin-si, Gyeonggi-do 17084 (KR)
(72) Inventor: LEE, Donggeun, 17084 Gyeonggi-do (KR); YANG, Hosung, 17084 Gyeonggi-do (KR); YOU, Duckjae, 17084 Gyeonggi-do (KR); WOO, Jiye, 17084 Gyeonggi-do (KR); YUK, Seoyeon, 17084 Gyeonggi-do (KR); LEE, Kyumin, 17084 Gyeonggi-do (KR)
(74) Representative: Michalski Hüttermann & Partner mbB

(57) **Abstract**

Disclosed are an electrode and a rechargeable lithium battery including the electrode. The electrode includes a current collector, an electrode active material layer on the current collector, and a coating layer on the electrode active material layer, wherein the coating layer includes a (meth)acrylonitrile-based polymer, an aramid-based polymer, and an alkali metal salt, and the coating layer includes nanofibers forming a plurality of pores.

## Description

### BACKGROUND

### 1. Field

Electrodes for a rechargeable lithium battery, and rechargeable lithium batteries including the electrodes are disclosed.

### 2. Description of the Related Art

With increasing use of electronic devices that use batteries such as, e.g., mobile phones, notebook computers, electric vehicles, and the like, demand for rechargeable batteries having high energy density and high capacity is increasing. Accordingly, improving the performance of rechargeable lithium batteries may be advantageous.

Rechargeable lithium batteries include a positive electrode and a negative electrode including an active material capable of intercalating and deintercalating lithium ions, and an electrolyte solution, and electrical energy is produced by oxidation and reduction reactions when lithium ions are intercalated/deintercalated at the positive and negative electrodes.

### SUMMARY

Some example embodiments include an electrode for a rechargeable lithium battery having desired or improved heat resistance, adhesive strength, air permeability, and mechanical strength, and low thermal shrinkage rate when impregnated with an electrolyte solution.

Some example embodiments include a rechargeable lithium battery having desired or improved thermal safety and charge/discharge characteristics, the rechargeable lithium battery including the above electrode.

Some example embodiments include an electrode including a current collector, an electrode active material layer on the current collector, and a coating layer on the electrode active material layer. The coating layer includes a (meth)acrylonitrile-based polymer, an aramid-based polymer, and an alkali metal salt, and the coating layer includes nanofibers forming a plurality of pores.

Some example embodiments include a rechargeable lithium battery including a positive electrode, a negative electrode, and an electrolyte. At least one of the positive electrode and the negative electrode is or includes the electrode.

The electrode for the rechargeable lithium battery according to some example embodiments has desired or improved heat resistance, adhesive strength, air permeability, and mechanical strength, and has a low thermal shrinkage rate when impregnated with an electrolyte solution, and a rechargeable lithium battery including the electrode may exhibit desired or improved thermal safety and charge/discharge characteristics.

### BRIEF DESCRIPTION OF THE DRAWINGS

FIG. 1 is a schematic perspective view showing a portion of a cylindrical rechargeable lithium battery cut away.
FIG. 2 is a cross-sectional view schematically showing a prismatic rechargeable lithium battery.
FIG. 3 and FIG. 4 are schematic exploded perspective views of a pouch-type rechargeable lithium battery.
FIG. 5 is a scanning electron microscope (SEM) image of the surface of the coating layer of the negative electrode according to Example 1.
FIG. 6 is a scanning electron microscope (SEM) image of the surface of the coating layer of the negative electrode according to Example 2.
FIG. 7 is a scanning electron microscope (SEM) image of the surface of the coating layer of the negative electrode according to Comparative Example 1.
FIG. 8 is a scanning electron microscope (SEM) image of the surface of the coating layer of the negative electrode according to Comparative Example 2.
FIG. 9 is an image evaluating the thermal shrinkage rate during electrolyte solution impregnation of the coating layer of the negative electrode according to Example 1.
FIG. 10 is an image evaluating the thermal shrinkage rate during electrolyte solution impregnation of the coating layer of the negative electrode according to Example 2.
FIG. 11 is an image evaluating the thermal shrinkage rate during electrolyte solution impregnation of the coating layer of the negative electrode according to Comparative Example 1.
FIG. 12 is an image evaluating the thermal shrinkage rate during electrolyte solution impregnation of the coating layer of the negative electrode according to Comparative Example 2.

### DETAILED DESCRIPTION

Hereinafter, example embodiments are described in detail. However, these embodiments are presented as an example, and the present disclosure is not limited thereto, and the present disclosure is defined by the scope of the claims described below.

As used herein, when a specific definition is not otherwise provided, layer, it is understood that when an element such as a layer, film, region, or substrate is referred to as being "on" another element, the element can be directly on the other element or intervening elements may also be present therebetween.

As used herein, when a specific definition is not otherwise provided, what is indicated in the singular may also include the plural. In addition, unless otherwise specified, "A or B" may mean "including A, including B, or including A and B."

As used herein, "combination thereof" means a mixture, a laminate, a composite, a copolymer, an alloy, a blend, a reaction product, and the like of the constituents.

As used herein, when a definition is not otherwise provided, the particle diameter may be an average particle diameter. In addition, the particle diameter may refer to an average particle diameter (D₅₀), which means the diameter of particles having a cumulative volume of 50 volume% in the particle size distribution. The average particle diameter (D₅₀) may be measured by a method well known to those skilled in the art, for example, by a particle size analyzer, or by a transmission electron microscope (TEM) image, or a scanning electron microscope (SEM) image. Alternatively, a dynamic light-scattering measurement device is used to perform a data analysis, and the number of particles is counted for each particle size range. From this, the average particle diameter (D₅₀) value may be readily obtained through a calculation. Alternatively, the average particle diameter (D₅₀) value can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device.

As used herein, "(meth)acrylate" may mean both methacrylate and acrylate.

As used herein, amounts of components in the coating layer may be measured using an inductively coupled plasma-optical emission spectroscopy (ICP-OES) or a scanning electron microscopy-energy dispersive spectroscopy (SEM-EDS), or may be predicted from the amount of polymer added to the composition for the coating layer.

A conventional separator for a rechargeable lithium battery mainly uses polyethylene (PE) having poor heat resistance properties, wherein in order to secure high tensile strength required during the stacking process, PE polymer chains may be advantageous in providing high orientation through stretching.

However, the highly oriented polymer chains tend to return to their unoriented state in a high temperature environment, which result in thermal shrinkage. This may shrink the separator and even make the separator smaller than an electrode, which may induce short circuits within the battery and thus cause serious safety problems such as, e.g., overreaction, thermal explosion, thermal runaway, or the like.

In addition, PE, which has low heat resistance, is typically not suitable for a high-temperature pressing process. In general, because PE, which pores are blocked at a temperature of about 90 °C or higher, may lose a function as a separator, even if (when) an adhesive layer is introduced, it is challenging to press at high temperatures.

Accordingly, since it is challenging to apply by ceramic coating alone, which lacks adhesive strength, to structures such as pouch cells, it may be advantageous to introduce an additional adhesive layer such as, e.g., a PVDF-based adhesive layer.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Electrode for Rechargeable Lithium Battery

An electrode according to some example embodiments includes a current collector, an electrode active material layer positioned on the current collector, and a coating layer positioned on the electrode active material layer. The coating layer includes a (meth)acrylonitrile-based polymer, an aramid-based polymer, and an alkali metal salt, and the coating layer includes nanofibers forming a plurality of pores.

An electrode according to some example embodiments includes a coating layer formed by electrospinning a composition for forming a coating layer including the (meth)acrylonitrile-based polymer, the aramid-based polymer, and the alkali metal salt onto an electrode active material layer, thereby having desired or improved heat resistance, adhesive strength, air permeability, and mechanical strength, and having a substantially low thermal shrinkage rate when impregnated with an electrolyte solution (wetting).

For example, the electrode may include a current collector, and an electrode active material layer on the current collector. The coating layer may be disposed on the electrode active material layer and may be integrated with the electrode active material layer. For example, the coating layer may be or include an electrospun film formed by electrospinning on the electrode active material layer.

The coating layer may function as a separator between the positive and negative electrodes to reduce or prevent short circuits, and thus, a rechargeable lithium battery according to some example embodiments may not include a separate separator. Accordingly, because the rechargeable lithium battery according to some example embodiments does not include a separate separator, the separator can be omitted during manufacturing. In addition, because there is no need to perform a lamination process to combine the separator and the electrode, the battery can be manufactured economically, and the energy density may be increased while reducing the volume of the battery.

In some example embodiments, a battery may be manufactured by stacking an electrode and a counter electrode so that the active material layer of the counter electrode is in contact with the coating layer to manufacture an electrode, inserting the electrode into a battery case, and then injecting an electrolyte solution.

As another example, both the positive and negative electrodes may be manufactured by forming a coating layer according to some example embodiments, stacking the positive and negative electrodes so that the respective coating layers are in contact with each other to form an electrode, inserting the stacked positive and negative electrodes into a case, and then injecting an electrolyte solution to manufacture a battery.

As another example, an all-solid-state rechargeable battery may be manufactured by sequentially stacking the electrode and a counter electrode on the coating layer.

For example, a separator may be separately interposed between the positive and negative electrodes depending on the required specifications.

In various example embodiments, the coating layer may be integrated with the electrodes to implement strong adhesiveness while implementing desired or improved air permeability and physical strength between the positive and negative electrodes, and may effectively perform a role of isolating the two electrodes even with a thin thickness, and may improve cycle-life characteristics of the battery by reducing or preventing the growth of lithium dendrites formed during charge and discharge.

In addition, the fact that the coating layer is integrated with the electrode active material layer may refer to a state in which a portion of the coating layer components permeates the electrode active material layer by directly forming the coating layer on the electrode active material layer using an electrospinning manner, and may refer to a region in which the electrode active material layer components and the coating layer components are mixed with each other at the interface between the electrode active material layer and the coating layer.

According to some example embodiments, the electrode may more firmly bond the electrode active material layer and the coating layer and exhibit higher adhesiveness compared to cases where a coating layer is formed on an electrode active material layer using a general coating method or where the coating layer is separately manufactured in a film form and then stacked on the electrode active material layer.

Accordingly, the fact that the coating layer is integrated with the electrode active material layer may be clearly seen when a cross-section of the electrode is photographed using a scanning electron microscope (SEM), and the like, and although the electrode active material layer and the coating layer are distinguishable, the interface (boundary portion) between the electrode active material layer and the coating layer may appear uneven (unflat), or a region where the components of the electrode active material layer and the components of the coating layer are mixed may appear with a certain thickness at the interface between the electrode active material layer and the coating layer.

In addition, because the electrode active material layer and the coating layer are integrated, the electrode active material layer and the coating layer are in close contact with each other, so that the interface between the electrode active material layer and the coating layer may be formed in a dense form without pores.

Accordingly, because the coating layer is integrated with the electrode active material layer, the coating layer may be in a more firmly bonded state with the electrode active material layer. Accordingly, the physical strength and durability of the battery are improved, and the processability may be improved as problems of each layer detaching or slipping do not occur during the battery manufacturing process.

For example, the coating layer formed by electrospinning includes nanofibers forming a plurality of pores, and the nanofibers may have a three-dimensional network structure, for example, a woven structure or a non-woven structure. Accordingly, when the nanofibers have a three-dimensional network structure, for example, a woven structure or a non-woven structure, there may be an advantage of reducing or minimizing Li ion movement resistance.

For example, the average diameter of the nanofibers may be in a range of ≥ 50 nm to ≤ 200 nm, for example, ≥ 50 nm to ≤ 150 nm, ≥ 50 nm to ≤ 120 nm, or ≥ 50 nm to ≤ 100 nm. If (when) the above numerical range is satisfied, the coating layer may exhibit desired or improved air permeability, adhesiveness, and mechanical strength.

The diameter of the nanofibers may refer to the widest diameter among the diameters of the fibers measured based on the cross-section of each nanofiber, and may be measured in a direction perpendicular to the longitudinal direction of the nanofibers. The average diameter of the nanofibers may be calculated by randomly measuring the cross-sectional diameters of about 20 fibers in a scanning electron microscope image of the surface of the coating layer, and then calculating the arithmetic average thereof.

The existence of nanofibers in a three-dimensional network structure may mean a porous structure including multiple pores.

For example, the average diameter of the pores included in the nanofibers may be in a range of ≥ 50 nm to ≤ 300 nm, for example, ≥ 80 nm to ≤ 300 nm, ≥ 80 nm to ≤ 270 nm, ≥ 100 nm to ≤ 250 nm, or ≥ 150 nm to ≤ 250 nm. When the above numerical range is satisfied, the coating layer may exhibit desired or improved air permeability, adhesive strength, and mechanical strength by having pores of a uniform, or substantially uniform, appropriate or desired size.

The pore diameter refers to a diameter of an individual pore included in a nanofiber having a three-dimensional network structure, and the longest axis crossing the cross-section of the pore may be defined as the diameter. The average diameter of the pores may mean a value obtained by measuring the cross-sectional diameters of about 20 pores in an SEM image of the surface of the coating layer, and calculating the arithmetic mean thereof.

For example, a thickness of the coating layer may be in a range of ≥ 1 µm to ≤ 30 µm, for example, greater than or equal to about 4 µm, greater than or equal to about 5 µm, or greater than or equal to about 6 µm, and may be less than or equal to about 25 µm, less than or equal to about 20 µm, less than or equal to about 15 µm, or less than or equal to about 10 µm. If (when) the thickness of the coating layer is within the above range, a high density as desired may be exhibited, and thus the formation of Li dendrites during charge and discharge may be more effectively reduced or suppressed.

According to some example embodiments, the coating layer may include a first coating layer and a second coating layer, the first coating layer may include the (meth)acrylonitrile-based polymer, the aramid-based polymer, and the alkali metal salt, and the second coating layer may include an inorganic material.

At this time, the first coating layer may be or include an organic layer, and the second coating layer may be or include an inorganic layer.

The first coating layer is a layer including the (meth)acrylonitrile-based polymer, the aramid-based polymer, and the alkali metal salt, and all of the descriptions of the above-described coating layers may be applied.

For example, the coating layer may include at least one of the first coating layers, and may further include at least one of the second coating layers together with the at least one first coating layer.

For example, the electrode may include two or more first coating layers, and may include two to ten first coating layers. Accordingly, when two or more first coating layers are included, there may be an advantage in that the density of the coating layer may be increased, thereby enhancing safety, such as reducing or suppressing dendrites.

Additionally, together with the first coating layer, the second coating layer may include two or more, and in some example embodiments, from two to ten second coating layers. If (when) two or more first coating layers and two or more second coating layers are included, the first coating layers and the second coating layers may be formed by alternately stacking each other, or a plurality of first coating layers and a plurality of second coating layers may be formed by alternately stacking each other.

The second coating layer (inorganic layer) may be in the form of a dense layer, and this second coating layer may be formed by, for example, an electrospraying method. However, the method for forming the second coating layer is not limited to the electrospraying method, and as long as the second coating layer may be formed into a dense layer, forming the second coating layer may be performed using a general coating process such as, e.g., a doctor blade. If (when) the second coating layer is in the form of a dense layer, the formation of Li dendrites may be reduced or suppressed more effectively, and if (when) the second coating layer is in the form of a porous layer, a short circuit may occur during charge and discharge, which is not suitable.

The second coating layer includes an inorganic material, and the inorganic material may include at least one of alumina (Al₂O₃), boehmite (aluminum oxide hydroxide), zirconia, titanium oxide (TiO₂), silica (SiO₂), or a combination thereof.

If (when) a second coating layer is further included on the first coating layer, a portion of the second coating layer may be inserted into the first coating layer.

In addition to the first coating layer described above, if (when) a second coating layer is further included, a heat-resistant synergy effect may be provided, particularly due to the inclusion of a heat-resistant polymer, thereby reducing or suppressing the problem of damage to the negative electrode during the battery manufacturing process. In addition, the second coating layer is effective in reducing or suppressing the occurrence of lithium dendrites during charging and discharging, and the effect of increasing heat resistance and puncture strength may be further obtained by including inorganic materials. This effect is difficult to obtain when a heat-resistant polymer and an inorganic material are mixed together to form a single layer, and is therefore not suitable.

In the case where the coating layer further includes a second coating layer together with the first coating layer, and the first coating layer is formed first, the first coating layer is formed by electrospinning to form a three-dimensional network structure, so that when the second coating layer is formed on the first coating layer by electrospraying, the inorganic material may be inserted into the first coating layer. Therefore, both the obtained first coating layer and the second coating layer may be integrated with the electrode active material layer.

For example, if (when) the coating layer includes only the first coating layer, a thickness of the first coating layer may mean a thickness of the coating layer. The thickness of the above first coating layer (organic layer) refers to the thickness of the region where the organic material exists within the coating layer integrated with the electrode active material layer, and does not refer to the thickness alone where the organic material exists independently.

For example, when the coating layer includes both a first coating layer and a second coating layer, the thickness of the second coating layer may be in a range of ≥ 1 µm to ≤ 30 µm, for example, greater than or equal to about 5 µm, or greater than or equal to about 8 µm, and may be less than or equal to about 25 µm, less than or equal to about 20 µm, less than or equal to about 15 µm, or less than or equal to about 10 µm.

For example, a thickness of the second coating layer (inorganic layer) refers to a thickness of the region where the inorganic material is present within the coating layer and is integrated with the electrode active material layer, and does not refer to a thickness alone where the inorganic material exists independently. If (when) the thickness of the inorganic layer is within the above range, the density of the inorganic layer is improved as desired, so that the occurrence of Li dendrites may be somewhat reduced or suppressed, which is suitable.

In some example embodiments, the coating layer includes a (meth)acrylonitrile-based polymer, an aramid-based polymer, and an alkali metal salt, and may optionally further include a fluorine-based polymer.

Hereinafter, the components included in the coating layer are described.

The (meth)acrylonitrile-based polymer may refer to a polymer including a structural unit derived from an acrylonitrile (AN) or methacrylonitrile (MAN) monomer.

Because the (meth)acrylonitrile-based polymer includes a nitrile group (-C ≡ N), the (meth)acrylonitrile-based polymer may have desired or improved heat resistance, mechanical strength, and chemical resistance.

For example, the (meth)acrylonitrile-based polymer may be or include at least one of polyacrylonitrile (PAN), polymethacrylonitrile (PMAN), an acrylonitrile-butadiene-styrene (ABS) copolymer, a methacrylonitrile-butadiene-styrene copolymer, an acrylonitrile-styrene copolymer, a methacrylonitrile-styrene copolymer, an acrylonitrile-ethylene copolymer (AEM), a methacrylonitrile-ethylene copolymer, a (meth)acrylonitrile-(meth)acrylate copolymer (e.g., an acrylonitrile-acrylate copolymer, a methacrylonitrile-acrylate copolymer, an acrylonitrile-methacrylate copolymer, and a methacrylonitrile-methacrylate copolymer), or a combination thereof.

For example, the (meth)acrylonitrile-(meth)acrylate copolymer may be prepared by copolymerizing a (meth)acrylonitrile monomer and a (meth)acrylate monomer, and may be or include a copolymer including a structural unit derived from the (meth)acrylonitrile monomer and a structural unit derived from the (meth)acrylate monomer. For example, the (meth)acrylate monomer may include a monofunctional (meth)acrylate or a multifunctional (meth)acrylate.

The monofunctional (meth)acrylate may be or include an alkyl (meth)acrylate (wherein the alkyl is C1 to C10 alkyl), a hydroxyl group-containing alkyl (meth)acrylate (wherein the alkyl is C1 to C10 alkyl), and the like, and for example, may be or include at least one of methyl metacrylate, methyl acrylate, ethyl acrylate, butyl acrylate, 2-ethylhexyl acrylate, 2-hydroxyethyl acrylate, or 2-hydroxypropyl acrylate.

The multifunctional (meth)acrylate may include at least one of trimethylolpropane triacrylate, pentaerythritol triacrylate, pentaerythritol tetraacrylate, dipentaerythritol hexaacrylate, neopentyl glycol diacrylate, hexanediol diacrylate, or a combination thereof.

For example, the structural unit derived from the (meth)acrylate monomer may be included in an amount in a range of ≥ 5 wt% to ≤ 25 wt%, for example, ≥ 5 wt% to ≤ 20 wt%, or ≥ 5 wt% to ≤ 15 wt% based on 100 wt% of the (meth)acrylonitrile-(meth)acrylate copolymer. In this case, the heat resistance of the (meth)acrylonitrile-based polymer may be maintained while improving flexibility and processability.

As an example, the (meth)acrylonitrile-based polymer may include the polyacrylonitrile or the polymethacrylonitrile.

For example, the glass transition temperature (T_{g}) of the (meth)acrylonitrile-based polymer may be in a range of ≥ 80 °C to ≤ 110 °C, for example ≥ 80 °C to ≤ 100 °C, or ≥ 90 °C to ≤ 100 °C. If (when) the above numerical range is satisfied, an electrode with desired or improved heat resistance may be realized.

For example, a weight average molecular weight (M_{w}) of the (meth)acrylonitrile-based polymer may be in a range of ≥ 50,000 g/mol to ≤ 250,000 g/mol, for example ≥ 50,000 g/mol to ≤ 100,000 g/mol. If (when) the above numerical range is satisfied, the electrospinning solution including the (meth)acrylonitrile-based polymer may be readily electrospun, thereby improving the uniformity and adhesiveness of the electrospun film, and thereby implementing an electrode having a desired or improved mechanical strength such as, e.g., tensile strength and elongation.

For example, the (meth)acrylonitrile-based polymer may be included in an amount in a range of ≥ 30 wt% to ≤ 98 wt%, for example, ≥ 35 wt% to ≤ 98 wt%, ≥ 37 wt% to ≤ 98 wt%, or ≥ 37 wt% to ≤ 97 wt% based on 100 wt% of the coating layer. If (when) the above numerical range is satisfied, an electrode with desired or improved heat resistance, adhesive strength, and mechanical strength may be realized.

The aramid-based polymer is a type of aromatic polyamide, and has desired or improved heat resistance and chemical stability. Therefore, the aramid-based polymer is generally stable even at high temperatures greater than or equal to about 400 °C, has desired or improved self-extinguishing properties, desired or improved heat resistance, and desired or improved mechanical strength.

In addition, because the aramid-based polymer includes an amide group as a functional group, the aramid-based polymer has high affinity with the functional group of the (meth)acrylonitrile-based polymer.

The coating layer may reduce the phenomenon of fusion between nanofibers of the electrospun coating layer by including an aramid-based polymer together with the (meth)acrylonitrile-based polymer. Additionally, electronetting, which causes the formation of additional substantially thin fibers between nanofibers, may be used to create an electrode including a coating layer with high areal density and desired or improved air permeability. In addition, the aramid-based polymer does not dissolve in electrolyte solutions commonly used for rechargeable lithium batteries, and thus also has desired or improved chemical stability.

For example, the aramid-based polymer may include at least one of a meta-aramid (m-aramid) polymer, a para-aramid (p-aramid) polymer, or a combination thereof. As an example, the aramid-based polymer may include the meta-aramid-based polymer.

For example, the meta-aramid-based polymer may include at least one of poly(m-phenylene isophthalamide) (PMIA), poly(isophthaloyl chloride-co-m-phenylenediamine), poly(m-phenylene sebacamide), or a combination thereof.

As an example, the meta-aramid-based polymer may include the poly(m-phenylene isophthalamide), which may be or include a compound commercialized as Nomex.

For example, the para-aramid-based polymer may include at least one of poly(p-phenylene terephthalamide), poly(p-phenylene isophthalamide), poly(p-benzamide), or a combination thereof.

For example, a weight average molecular weight (M_{w}) of the aramid-based polymer may be in a range of ≥ 30,000 g/mol to ≤ 300,000 g/mol. If (when) the above numerical range is satisfied, a coating layer having desired or improved mechanical strength and uniformly, or substantially uniformly, formed nanofibers may be implemented.

For example, the glass transition temperature (T_{g}) of the aramid-based polymer may be in a range of ≥ 200 °C to ≤ 400 °C, for example ≥ 250 °C to ≤ 350 °C, or ≥ 280 °C to ≤ 320 °C.

For example, the decomposition temperature (T_{d}) of the aramid-based polymer may be in a range of ≥ 400 °C to ≤ 500 °C, for example, ≥ 400 °C to ≤ 450 °C.

If (when) the glass transition temperature (T_{g}) and decomposition temperature (T_{d}) of the aramid-based polymer satisfy the above numerical range, an electrode with desired or improved heat resistance may be realized.

For example, the aramid-based polymer may be included in an amount in a range of ≥ 1 wt% to ≤ 20 wt%, for example, ≥ 1 wt% to ≤ 10 wt%, ≥ 1 wt% to ≤ 7.5 wt%, ≥ 2 wt% to ≤ 10 wt%, ≥ 2 wt% to ≤ 7.5 wt%, or ≥ 2 wt% to ≤ 5 wt% based on 100 wt% of the coating layer. When the above numerical range is satisfied, an electrode having a desired or improved heat resistance, adhesive strength, and mechanical strength, as well as low thermal shrinkage when impregnated with electrolyte solution, may be realized.

For example, the aramid-based polymer may be included in an amount in a range of ≥ 1 part by weight to ≤ 10 parts by weight, for example, ≥ 2 parts by weight to ≤ 8 parts by weight, or ≥ 2 parts by weight to ≤ 5 parts by weight, based on 100 parts by weight of the (meth)acrylonitrile-based polymer. If (when) the above numerical range is satisfied, an electrode having desired or improved heat resistance, adhesive strength, and mechanical strength, as well as low thermal shrinkage rate when impregnated with electrolyte solution may be realized.

The alkali metal salt may perform a function of enabling the above-described aramid-based polymer to be dissolved in the solvent of the electrospinning solution.

In addition, the alkali metal salt may increase the electrical conductivity of the electrospinning solution, so that when the solution is spun, the electrospinning solution may be semi-wet coated on the electrode active material layer, thereby allowing the manufactured coating layer to have high adhesive strength.

In addition, when an electrospinning solution including an aramid-based polymer and the alkali metal salt is electrospun, the phenomenon of fusion between nanofibers of the electrospun coating layer may be reduced and electronetting, in which substantially thin fibers are additionally formed between the nanofibers, may occur, thereby enabling the implementation of an electrode including a coating layer having a high areal density and desired or improved air permeability.

The alkali metal salt may include at least one of chloride, sulfate, nitrate, carbonate, hydroxide, or a combination thereof of the alkali metal.

For example, the alkali metal salt may include at least one of lithium chloride (LiCl), sodium chloride (NaCl), potassium chloride (KCI), rubidium chloride (RbCl), cesium chloride (CsCl), lithium sulfate (Li₂SO₄), sodium sulfate (Na₂SO₄), potassium sulfate (K₂SO₄), lithium nitrate (LiNO₃), sodium nitrate (NaNO₃), potassium nitrate (KNO₃), lithium carbonate (Li₂CO₃), sodium carbonate (Na₂CO₃), potassium carbonate (K₂CO₃), lithium hydroxide (LiOH), sodium hydroxide (NaOH), potassium hydroxide (KOH), or a combination thereof.

For example, the alkali metal salt may be included in an amount in a range of ≥ 0.1 wt% to ≤ 10 wt%, ≥ 0.1 wt% to ≤ 7.5 wt%, ≥ 0.1 wt% to ≤ 5 wt%, ≥ 0.1 wt% to ≤ 2.5 wt%, ≥ 0.1 wt% to ≤ 1.5 wt%, ≥ 0.1 wt% to ≤ 1 wt%, or ≥ 0.5 wt% to ≤ 1 wt%, based on 100 wt% of the coating layer. If (when) the above numerical range is satisfied, an electrode with desired or improved adhesive strength and air permeability may be implemented.

For example, the alkali metal salt may be included in an amount in a range of ≥ 10 parts by weight to ≤ 30 parts by weight, for example, ≥ 15 parts by weight to ≤ 30 parts by weight, ≥ 10 parts by weight to ≤ 25 parts by weight, or ≥ 15 parts by weight to ≤ 25 parts by weight based on 100 parts by weight of the aramid-based polymer. If (when) the above numerical range is satisfied, an electrode with desired or improved adhesive strength and air permeability may be implemented.

For example, the coating layer may further include a fluorine-based polymer.

The fluorine-based polymer may maintain a stable structure even at high temperatures, so that the fluorine-based polymer has desired or improved heat resistance and desired or improved adhesive strength, and has desired or improved affinity with the aramid-based polymer including an amide group as a functional group.

In addition, for example, if (when) the electrode is a negative electrode and the opposite electrode stacked on the coating layer of the negative electrode so that the positive electrode active material layer is in contact with it is a positive electrode, the coating layer included in the electrode and the positive electrode active material layer of the positive electrode may be stacked in contact with each other, and for example, because the binder included in the positive electrode active material layer is mainly a fluorine-based polymer, in this case, the same fluorine-based polymer is included in the coating layer and the positive electrode active material layer, so that the adhesive strength between the positive electrode and the negative electrode may be further improved.

For example, the glass transition temperature (T_{g}) of the fluorine-based polymer may be in a range of ≥ -50 °C to ≤ 0°C, for example ≥ -40 °C to ≤ -10 °C, or ≥ -40 °C to ≤ -20 °C.

For example, the melting point (Tₘ) of the fluorine-based polymer may be in a range of ≥ 100 °C to ≤ 250 °C, for example ≥ 150 °C to ≤ 250 °C, ≥ 100 °C to ≤ 200 °C, or ≥ 100 °C to ≤ 150 °C.

If (when) the glass transition temperature (T_{g}) and melting point (Tₘ) of the fluorine-based polymer satisfy the above numerical ranges, an electrode with desired or improved heat resistance and adhesive strength may be realized.

For example, the fluorine-based polymer may include at least one of polyvinylidene fluoride (PVdF), polyvinylidene fluoride-hexafluoropropylene (PVdF-HFP), polytetrafluoroethylene (PTFE), fluorinated ethylene-propylene copolymer (FEP), ethylene-tetrafluoroethylene (ETFE), polyvinyl fluoride (PVF), or a combination thereof.

For example, a sum of the amount of the (meth)acrylonitrile-based polymer and the fluorine-based polymer may be in a range of ≥ 30 wt% to ≤ 98 wt%, for example, ≥ 35 wt% to ≤ 98 wt%, ≥ 37 wt% to ≤ 98 wt%, or ≥ 37 wt% to ≤ 97 wt% based on 100 wt% of the coating layer. If (when) the above numerical range is satisfied, an electrode with desired or improved heat resistance, adhesive strength, and mechanical strength may be realized.

For example, the aramid-based polymer may be included in an amount in a range of ≥ 1 part by weight to ≤ 10 parts by weight, for example, ≥ 2 parts by weight to ≤ 8 parts by weight, or ≥ 2 parts by weight to ≤ 5 parts by weight, based on 100 parts by weight of the sum of the (meth)acrylonitrile-based polymer and the fluorine-based polymer. If (when) the above numerical range is satisfied, heat resistance, an electrode having desired or improved heat resistance, adhesive strength, and mechanical strength, as well as low thermal shrinkage when impregnated with electrolyte solution may be realized.

For example, the fluorine-based polymer may be included in an amount in a range of ≥ 0 wt% to ≤ 60 wt%, for example, ≥ 10 wt% to ≤ 60 wt%, ≥ 30 wt% to ≤ 60 wt%, or ≥ 50 wt% to ≤ 70 wt% based on 100 wt% of the coating layer. If (when) the above numerical range is satisfied, an electrode with desired or improved heat resistance and adhesiveness may be realized.

For example, the dry adhesive strength (gf/mm) of the coating layer may be greater than or equal to ≤ 0.4 gf/mm, for example, in a range of ≥ 0.4 gf/mm to ≤ 3 gf/mm, ≥ 0.4 gf/mm to ≤ 2 gf/mm, ≥ 0.4 gf/mm to ≤ 1.5 gf/mm, or ≥ 0.4 gf/mm to ≤ 0.8 gf/mm.

For example, the wet adhesive strength (gf/mm) of the coating layer may be greater than ≥ 0.3 gf/mm, for example, in a range of ≥ 0.32 gf/mm to ≤ 2 gf/mm, ≥ 0.32 gf/mm to ≤ 1 gf/mm, or ≥ 0.32 gf/mm to ≤ 0.6 gf/mm.

The dry adhesive strength and wet adhesive strength of the above coating layer refer to the adhesive strength between the electrode active material layer and the coating layer, and when the above numerical range is satisfied, it can be seen that the coating layer is substantially strongly adhered to the electrode active material layer.

The dry adhesive strength and wet adhesive strength of the coating layer is measured by attaching a 1.5 cm-wide adhesive tape (3M Celotape, registered trademark) to a negative electrode fixed on a stainless steel plate and using a peel tester (manufacturer: KIPAE E&T, Model Name: KP-M1T-s).

For example, the adhesive strengths may be measured by a 180° peel strength test under the conditions of a 1 kg load cell and a peel speed of 100 mm/min.

For example, the areal density (g/cm²) of the coating layer may be in a range of ≥ 5 g/m² to ≤ 15 g/m², for example, ≥ 6 g/m² to ≤ 12 g/m², or ≥ 7 g/m² to ≤ 12 g/m². For example, the areal density of the coating layer may be calculated by measuring the weight of a total of three electrode specimens (1 cm x 12 cm), measuring the average value of the coating layer weight excluding the weight of the current collector and electrode active material layer, and then dividing the average value by the area of the specimen.

For example, the tensile strength (kgf/cm²) of the coating layer may be in a range of ≥ 500 kgf/cm² to ≤ 1500 kgf/cm², ≥ 700 kgf/cm² to ≤ 1500 kgf/cm², or ≥ 800 kgf/cm² to ≤ 1500 kgf/cm². The tensile strength of the coating layer may be measured according to ASTM D882 using a universal testing machine (UTM). For example, the tensile strength may be calculated by applying a tensile load to the coating layer at a tensile rate of 100 mm/min, measuring the maximum load until the coating layer is destroyed, and dividing this maximum load value by the initial cross-sectional area of the sample.

For example, the porosity (%) of the coating layer may be in a range of ≥ 10% to ≤ 60%, for example ≥ 20% to ≤ 50%, ≥ 30% to ≤ 50%, or ≥ 35% to ≤ 50%. The porosity (%) of the coating layer may be measured through mercury intrusion porosimetry or gas adsorption method (Brunauer-Emmett-Teller (BET) analysis).

For example, the air permeability (sec/100cc) of the coating layer may be less than ≥ 150 sec/100 cc, for example, in a range of ≥ 20 sec/100 cc to ≤ 120 sec/100 cc, ≥ 30 sec/100 cc to ≤ 100 sec/100 cc, or ≥ 35 sec/100 cc to ≤ 100 sec/100 cc. If (when) the air permeability of the coating layer satisfies the above numerical range, the safety of the battery may be improved by reducing or preventing gas generation during battery operation.

The air permeability of the coating layer may be obtained by measuring the time (in seconds) it takes for 100 cc of air to permeate using an air permeability measuring device (e.g., Asahi Seiko, EG01-55-1MR).

### Method for Manufacturing Electrode

A method for manufacturing an electrode according to some example embodiments includes forming an electrode active material layer on a current collector; preparing a composition for forming a coating layer including a (meth)acrylonitrile-based polymer, an aramid-based polymer, an alkali metal salt, and a solvent; electrospinning the composition for forming the coating layer on a surface of the electrode active material layer; and drying the composition for forming the coating layer.

The composition for forming the coating layer includes a (meth)acrylonitrile-based polymer, an aramid-based polymer, an alkali metal salt, and a solvent, and may optionally further include a fluorine-based polymer. The (meth)acrylonitrile-based polymer, aramid-based polymer, alkali metal salt, and fluorine-based polymer are the same as described above, so detailed descriptions are omitted here.

For example, the solvent included in the composition for forming the coating layer may include at least one of dimethylacetamide, N-methylpyrrolidone, dimethylformamide, dimethyl sulfoxide, acetone, or a combination thereof.

For example, the (meth)acrylonitrile-based polymer may be included in an amount in a range of ≥ 30 wt% to ≤ 98 wt%, for example, ≥ 35 wt% to ≤ 98 wt%, ≥ 37 wt% to ≤ 98 wt%, or ≥ 37 wt% to ≤ 97 wt% based on 100 wt% of the solid content included in the composition for forming the coating layer.

When the composition for forming the coating layer further includes the fluorine-based polymer, a sum of the amounts of the (meth)acrylonitrile-based polymer and the fluorine-based polymer may be included in an amount in a range of ≥ 30 wt% to ≤ 98 wt%, for example, ≥ 35 wt% to ≤ 98 wt%, ≥ 37 wt% to ≤ 98 wt%, or ≥ 37 wt% to ≤ 97 wt% based on 100 wt% of the solid content included in the composition for forming the coating layer.

If (when) the above numerical range is satisfied, an electrode having desired or improved heat resistance, adhesive strength, and mechanical strength may be manufactured.

For example, the aramid-based polymer may be included in an amount in a range of ≥ 1 wt% to ≤ 20 wt%, for example, ≥ 1 wt% to ≤ 10 wt%, ≥ 1 wt% to ≤ 7.5 wt%, ≥ 2 wt% to ≤ 10 wt%, ≥ 2 wt% to ≤ 7.5 wt%, or ≥ 2 wt% to ≤ 5 wt% based on 100 wt% of the solid content included in the composition for forming the coating layer.

For example, the aramid-based polymer may be included in an amount in a range of ≥ 1 part by weight to ≤ 10 parts by weight, for example, ≥ 2 parts by weight to ≤ 8 parts by weight, or ≥ 2 parts by weight to ≤ 5 parts by weight, based on 100 parts by weight of the (meth)acrylonitrile-based polymer.

When the composition for forming the coating layer further includes the fluorine-based polymer, the aramid-based polymer may be included in an amount in a range of ≥ 1 part by weight to ≤ 10 parts by weight, for example, ≥ 2 parts by weight to ≤ 8 parts by weight, or ≥ 2 parts by weight to ≤ 5 parts by weight, based on 100 parts by weight of the sum of the (meth)acrylonitrile-based polymer and the fluorine-based polymer.

When the above numerical range is satisfied, an electrode having desired or improved heat resistance, adhesive strength, and mechanical strength, as well as low thermal shrinkage rate when impregnated with electrolyte may be manufactured.

For example, the alkali metal salt may be included in an amount in a range of ≥ 0.1 wt% to ≤ 10 wt%, ≥ 0.1 wt% to ≤ 7.5 wt%, ≥ 0.1 wt% to ≤ 5 wt%, ≥ 0.1 wt% to ≤ 2.5 wt%, ≥ 0.1 wt% to ≤ 1.5 wt%, ≥ 0.1 wt% to ≤ 1 wt%, or ≥ 0.5 wt% to ≤ 1 wt%, based on 100 wt% of the solid content included in the composition for forming the coating layer. If (when) the above numerical range is satisfied, an electrode with desired or improved adhesive strength and air permeability may be manufactured.

For example, the alkali metal salt may be included in an amount in a range of ≥ 10 parts by weight to ≤ 30 parts by weight, for example, ≥ 15 parts by weight to ≤ 30 parts by weight, ≥ 10 parts by weight to ≤ 25 parts by weight, or ≥ 15 parts by weight to ≤ 25 parts by weight based on 100 parts by weight of the aramid-based polymer. If (when) the above numerical range is satisfied, an electrode with desired or improved adhesive strength and air permeability may be manufactured.

Next, a method for manufacturing an electrode according to some example embodiments includes electrospinning the composition for forming the coating layer on the surface of an electrode active material layer.

The electrospinning process may be performed by positioning one nozzle pack consisting of a tip having a hole size in a range of ≥ 15G (gauge) to ≤ 30G and a collector roller at a predetermined or desired interval, adding the electrospinning solution to the tip, positioning the target substrate on the collector roller, and then applying a voltage in a range of ≥ 35 kV to ≤ 100 kV to the tip.

The number of the tips may be adjusted as desired depending on the types and amounts of the polymers included in the electrospinning solution, and may be, for example, in a range of 1 to 100.

The predetermined or desired distance between the nozzle pack and the target material may be in a range of ≥ 10 cm to ≤ 20 cm.

If (when) the hole size of the tip is in a range of ≥ 15G to ≤ 20G, the hole size of the tip is suitable because a coating layer of a desired shape may be formed.

According to the electrospinning process, a polymer solution is spun and stretched into a fiber shape, and then spun onto a target substrate in the form of nanofibers, thereby forming a coating layer.

In more detail, the electrospinning solution is suspended in the form of a droplet due to surface tension at the tip end, and when voltage is applied, charges are accumulated on the surface of the electrospinning solution droplet, and a repulsive force between the charges occurs. Accordingly, the repulsion force between charges is directed in the opposite direction to the surface tension of the solution, and when a critical voltage is reached, a conical Taylor cone is formed, and a polymer jet is emitted from the tip of the Taylor cone, and through multiaxial stretching in the whipping region, nanofibers are collected in the form of a non-woven fabric on a collector roller to form a coating layer.

For example, the electrospinning process may be performed under conditions of a temperature in a range of ≥ 20 °C to ≤ 30 °C and a relative humidity in a range of ≥ 0% to ≤ 60%. If (when) the electrospinning process is performed under the above temperature and relative humidity conditions, there may be an advantage in spinning while maintaining the thickness of the fiber constant.

For example, the roll speed of the collector roller may be adjusted so that the coating layer may be formed to an appropriate or desired thickness, and may be, for example, a speed in a range of ≥ 0.1 meters per minute (mpm) to ≤ 3 mpm. For example, a flow rate of the electrospinning solution discharged from the tip may be adjusted to discharge at a rate in a range of ≥ 1 ml/min to ≤ 100 ml/min.

For example, the tip air is adjusted as desired to reduce or minimize interference between the tips and to enable uniform, or substantially uniform, electrospinning. The tip air adjustment may be performed by flowing compressed air at a pressure in a range of ≥ 0.01 MPa to ≤ 0.5 MPa.

For example, when the coating layer includes at least one, for example, two or more, first coating layers (organic layers), the electrospinning process may be performed two or more times.

As nanofibers are formed by electrospinning, the formed nanofibers may have a three-dimensional network structure. Because the coating layer is formed by an electrospinning process, the solvent may be readily volatilized, and thus the springback phenomenon that causes damage to the electrode may be better reduced or suppressed, which is suitable.

For example, when the coating layer further includes a second coating layer (inorganic layer), regardless of the order in which the first coating layer (organic layer) or the second coating layer (inorganic layer) is formed, the second coating layer (inorganic layer) may be formed by electrospraying an inorganic layer forming composition onto the target substrate. The composition for forming the inorganic layer may include an inorganic material, a binder, and a solvent.

The inorganic material is as described above, and the solvent may be or include at least one of dimethylacetamide, N-methylpyrrolidone, dimethylformamide, acetone, or a combination thereof.

The binder may be or include at least one of polyvinylidene fluoride, polyamideimide, polyvinylpyrrolidone, polyacrylonitrile, a copolymer thereof, or a combination thereof.

In the composition for forming the inorganic layer, an amount of the inorganic material may be in a range of ≥ 85 wt% to ≤ 96 wt% based on 100 wt% of the total composition. In the composition for forming the inorganic layer, an amount of the binder may be in a range of 0.5 wt% to 20 wt% based on 100 wt% of the total composition.

The electrospraying process may be performed by positioning one nozzle pack consisting of a tip having a hole size in a range of ≥ 15G (gauge) to ≤ 30G and a collector roller at a predetermined or desired interval, adding the composition for forming the inorganic layer to the tip, positioning the target substrate on the collector roller, and then applying a voltage in a range of ≥ 35 kV to ≤ 100 kV to the tip.

The number of the tips may be adjusted as desired depending on the type and amount of the inorganic material included in the composition for forming the inorganic layer, and may be, for example, in a range of 20 to 60.

The predetermined or desired distance between the nozzle pack and the target material may be in a range of ≥ 10 cm to ≤ 20 cm.

If (when) the hole size of the tip is in a range of ≥ 15G to ≤ 20G, the hole size of the tip is suitable because an inorganic layer of a desired shape may be formed.

By the electrospraying process, the inorganic layer composition can be sprayed in the form of dots onto a target substrate to form an inorganic layer. Accordingly, by electrospraying the composition for forming an inorganic layer, the composition for forming the inorganic layer is inserted between pores that may be naturally formed in the electrode active material layer, so that the inorganic layer and the electrode active material layer may be integrated.

For example, the roll speed of the collector roller may be adjusted so that the inorganic layer may be formed to an appropriate or desired thickness, and may be, for example, a speed in a range of ≥ 0.5 m/min to ≤ 3.0 m/min. In addition, the solid content in the composition for forming the inorganic layer discharged from the tip may be adjusted to be discharged at a rate in a range of ≥ 20 µl/min to ≤ 100 µl/min.

In addition, tip air is adjusted as desired to reduce or minimize interference between the tips and ensure uniform, or substantially uniform, electrospraying. The tip air adjustment may be performed by flowing compressed air at a pressure in a range of ≥ 0.1 MPa to ≤ 0.6 MPa.

After the electrospraying process, a drying process is performed using hot air at a temperature in a range of ≥ 90 °C to ≤ 130 °C.

For example, if (when) the coating layer includes at least one inorganic layer, for example, two or more, the electrospraying process may be performed two or more times.

After forming the coating layer or the coating layer including both the first coating layer and the second coating layer, roll pressing may be further performed. The roll pressing process may be performed at a temperature in a range of ≥ 25 °C to ≤ 110 °C. If (when) the roll pressing process is further performed, the coating layer may be compressed to shorten the Li ion movement path, which may have the advantage of being advantageous for lithium ion movement during charging and discharging. In addition, by additionally performing the roll pressing process, the coating layer and the electrode active material layer may be more effectively integrated.

When the coating layer includes both the first coating layer (organic layer) and the second coating layer (inorganic layer), if (when) the first coating layer (organic layer) is first formed, as a first composition for a coating layer is electrospun, the first composition for a coating layer may be inserted and integrated between pores naturally formed in the electrode active material layer. In addition, as the first coating layer is formed through the electrospinning, the first coating layer may be formed into a 3-dimensional network structure, for example, a woven structure or a non-woven fabric structure, wherein the composition for forming an inorganic layer may be inserted between the pores and integrated with the electrode active material layer, while forming the coating layer.

In addition, even when the second coating layer (inorganic layer) is first formed, a composition for forming an inorganic layer may be inserted and integrated between pores naturally formed in the electrode active material layer, and in addition, when the first composition for a coating layer is electrospun, this composition may somewhat permeate the second coating layer (inorganic layer), thereby integrating the coating layer and the electrode active material layer.

Additionally, this integration may more effectively occur by performing a roll press process.

### Rechargeable Lithium Battery

According to some example embodiments, a rechargeable lithium battery includes a positive electrode, a negative electrode, and an electrolyte. The positive electrode, the negative electrode, or a combination thereof includes the electrodes described above.

For example, the positive electrode may include a positive electrode current collector, a positive electrode active material layer on the positive electrode current collector, and a coating layer disposed on the positive electrode active material layer and integrated with the positive electrode active material layer. As an example, the negative electrode may include a negative electrode current collector, a negative electrode active material layer on the negative electrode current collector, and the coating layer disposed on the negative electrode active material layer and integrated with the negative electrode active material layer.

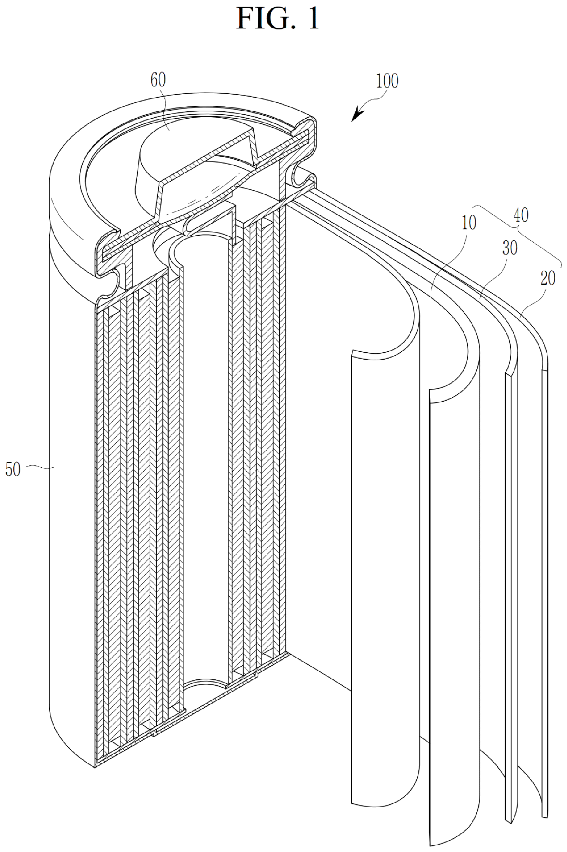

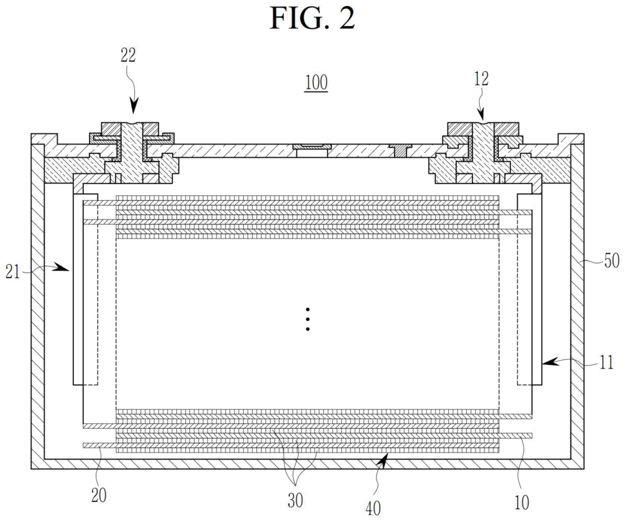

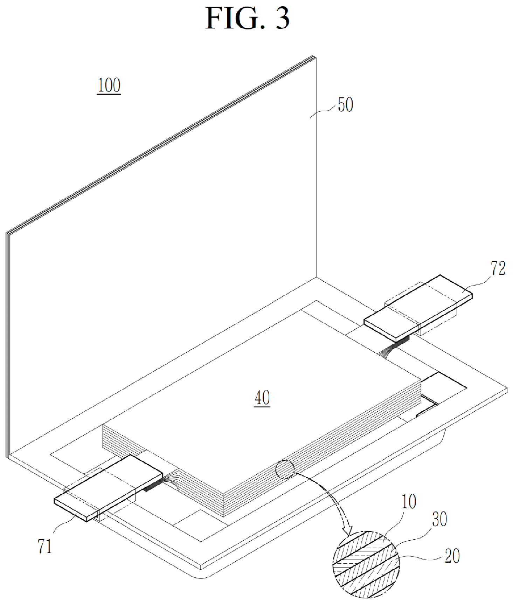

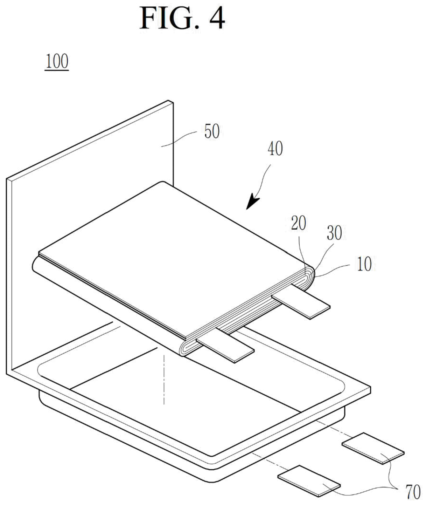

The rechargeable lithium battery may be classified into cylindrical, prismatic, pouch, coin, and the like depending on their shape. For example, FIG. 1 is a schematic view showing a cross-section of a cylindrical rechargeable lithium battery cut along a vertical axis and an electrode assembly 40 extending therefrom, FIG. 2 is a cross-sectional view of a prismatic rechargeable lithium battery, and FIG. 3 and FIG. 4 are schematic exploded perspective views of pouch-type rechargeable lithium batteries.

Referring to FIG. 1 to FIG. 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1.

In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 may include an electrode tab 70 that constitutes an electric path for conducting current formed in an electrode assembly 40 to the outside of the battery 100. For example, the electrode tabs 70 may be disposed in the same direction as illustrated in FIG. 4, or the positive electrode tab 71 and the negative electrode tab 72 may be disposed in opposite directions as illustrated in FIG. 3.

The rechargeable lithium battery according to some example embodiments may be applicable to various types of electric devices such as, e.g., automobiles, motorcycles, electric bicycles, drones, ships, trains, aircraft, portable electronic devices, mobile phones, electric tools, and/or power sources for power storage, and the present disclosure is not limited thereto.

Hereinafter, the configurations of a rechargeable lithium battery are described in detail.

### Positive Electrode

The positive electrode for a rechargeable lithium battery may include a current collector and a positive electrode active material layer formed on the current collector. The positive electrode active material layer includes a positive electrode active material, and may further include a binder and/or a conductive material.

For example, the positive electrode may further include an additive that can constitute a sacrificial the positive electrode.

As the positive electrode active material, a compound (lithiated intercalation compound) capable of intercalating and deintercalating lithium may be used. For example, one or more of a composite oxide of lithium and a metal such as or including at least one of cobalt, manganese, nickel, and a combination thereof may be used.

The composite oxide may be or include a lithium transition metal composite oxide, and examples thereof may include at least one of lithium nickel-based oxide, lithium cobalt-based oxide, lithium manganese-based oxide, lithium iron phosphate-based compound, cobalt-free lithium nickel-manganese-based oxide, or a combination thereof.

As an example, a compound represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare-earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al or a combination thereof.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of the metal excluding lithium in a lithium transition metal composite oxide. The high-nickel positive electrode active materials may achieve high capacity, and may be applied to high-capacity, high-density rechargeable lithium batteries.

An amount of the positive electrode active material may be in a range of ≥ 90 wt% to ≤ 99.5 wt% based on 100 wt% of the positive electrode active material layer, and amounts of each of the binder and the conductive material may independently be in a range of ≥ 0.5 wt% to ≤ 5 wt%, respectively, based on 100 wt% of the positive electrode active material layer.

The binder attaches the positive electrode active material particles to each other, and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may impart conductivity to the electrode, and any material that does not cause adverse chemical change and that conducts electrons can be used in the battery. Examples of the conductive material may include a carbon-based material such as at least one of natural graphite, artificial graphite, carbon black, acetylene black, Ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

The current collector may use an Al, but the current collector is not limited thereto.

### Negative Electrode

The negative electrode for a rechargeable lithium battery includes a current collector and a negative electrode active material layer on the current collector. The negative electrode active material layer may include a negative electrode active material, and may further include a binder and/or a conductive material.

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon or a combination thereof. The crystalline carbon may be graphite such as non-shaped, sheet-shaped, flake-shaped, sphere-shaped, or fiber-shaped natural graphite or artificial graphite, and the amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

For example, the negative electrode active material layer may include a range of ≥ 90 wt% to ≤ 99 wt% of the negative electrode active material, a range of ≥ 0.5 wt% to ≤ 5 wt% of the binder, and a range of ≥ 0 wt% to ≤ 5 wt% of the conductive material.

The binder attaches the negative electrode active material particles to each other, and attaches the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material capable of being fibrous, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

### Electrolyte

The electrolyte may include an electrolyte solution, a solid electrolyte, or a combination thereof.

The electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), or vinylethylene carbonate (VEC).

The ester-based solvent may include at least one of methyl acetate, ethyl acetate, n-propyl acetate, tert-butyl acetate, methylpropionate, ethylpropionate, propyl propionate, decanolide, mevalonolactone, valerolactone, or caprolactone. The ether-based solvent may include at least one of dibutyl ether, tetraglyme, diglyme, dimethoxyethane, 2-methyltetrahydrofuran, 2,5-dimethyltetrahydrofuran, and tetrahydrofuran. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

In addition, when using a carbonate solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

Hereinafter, examples of the present disclosure and comparative examples are described. These examples, however, are not in any sense to be interpreted as limiting the scope of the disclosure.

### Example: Manufacture of Negative Electrode:

### Example 1

A negative electrode active material slurry was prepared by mixing 97.5 wt% of artificial graphite, 1.0 wt% of carboxylmethyl cellulose, 1.5 wt% of styrene butadiene rubber (SBR) in a water solvent. The negative electrode active material slurry was coated on a copper current collector and then, dried and compressed to form a negative electrode active material layer.

Subsequently, a composition for a coating layer was prepared by mixing 96.5 wt% of polyacrylonitrile (T_{g} = 93 °C, M_{w} = 80,000g/mol), 2.9 wt% of poly(m-phenylene isophthalamide) (T_{g}= 300 °C, T_{d} = 430 °C), and 0.6 wt% of LiCl salt based on 100 wt% of a solid content of the composition for a coating layer in a dimethyl acetamide solvent.

The composition for the coating layer included 3 parts by weight of the poly(m-phenylene isophthalamide) based on 100 parts by weight of the polyacrylonitrile and 20 parts by weight of the LiCl salt based on 100 parts by weight of the poly(m-phenylene isophthalamide).

The composition for the coating layer was allowed to stand at 70 °C in a convection oven for 1 hour to dissolved the polyacrylonitrile and the poly(m-phenylene isophthalamide).

Next, the composition for forming the coating layer was electrospun in the form of nanofibers on the surface of the negative electrode active material layer. The electrospinning was performed under the following condition.

The electrospinning was performed at 26 °C under relative humidity of 50% by positioning one nozzle pack consisting of 52 tips with a hole size of 25G and a collector roller at an interval of 15 cm, and adding the electrospinning solution to the tips, and applying a voltage of 40 kV to 50 kV thereto. At this time, the roll speed of the collector roller was set to 1 m/min to 3 m/min, and the solid content in the composition for forming a coating layer discharged from the tip was set to 150 µl/min. In addition, the electrospinning was performed by inflowing compressed air at a pressure of 0.1 MPa.

After completing the electrospinning process, drying with hot air at 90 °C and roll-pressing were performed to form a 7 µm-thick coating layer on the negative electrode active material layer, thereby obtaining a negative electrode. The coating layer included the nanofibers (an average diameter = 92.2 nm) forming a plurality of pores (an average diameter = 237 nm).

Based on 100 wt% of the coating layer, the polyacrylonitrile was included at 96.5 wt% of, the poly(m-phenylene isophthalamide) was included at 2.9 wt%, and the LiCl salt was included at 0.6 wt%.

In addition, the coating layer included 3 parts by weight of the poly(m-phenylene isophthalamide) based on 100 parts by weight of the polyacrylonitrile, and 20 parts by weight of the LiCl salt based on 100 parts by weight of the poly(m-phenylene isophthalamide).

### Example 2

A negative electrode was manufactured substantially in the same manner as in Example 1 except that the composition for a coating layer was prepared by mixing 38.6 wt% of polyacrylonitrile (T_{g} = 93 °C, M_{w} = 80,000 g/mol), 57.9 wt% of polyvinylidene fluoride (T_{g} = -35.5 °C, Tₘ = 134.1 °C), 2.9 wt% of poly(m-phenylene isophthalamide) (T_{g} = 300 °C, T_{d} = 430 °C), and 0.6 wt% of the LiCl salt based on 100 wt% of a solid content of the composition for a coating layer in a dimethyl acetamide solvent.

The composition for the coating layer included 3 parts by weight of the poly(m-phenylene isophthalamide) and 20 parts by weight of the LiCl salt based on 100 parts by weight of a total amount of the polyacrylonitrile and the polyvinylidene fluoride.

In addition, based on 100 wt% of the coating layer according to Example 2, the polyacrylonitrile was included at 38.6 wt%, the polyvinylidene fluoride was included at 57.9 wt%, the poly(m-phenylene isophthalamide) was included at 2.9 wt%, and the LiCl salt was included at 0.6 wt%.

In addition, the coating layer included 3 parts by weight of the poly(m-phenylene isophthalamide) based on 100 parts by weight of the sum of the polyacrylonitrile and the polyvinylidene fluoride and 20 parts by weight of the LiCl salt based on 100 parts by weight of the poly(m-phenylene isophthalamide).

In the negative electrode of Example 2, the coating layer had a thickness of 7 µm and included nanofibers (an average diameter = 117.4 nm) forming a plurality of pores (an average diameter = 130.2 nm).

### Comparative Example 1

A negative electrode was manufactured substantially in the same manner as in Example 1 except that the electrospinning solution of Example 1 was prepared by not including the poly(m-phenylene isophthalamide) and the LiCl salt.

The negative electrode of Comparative Example 1 included a coating layer having a thickness of 7 µm and including nanofibers (an average diameter = 90.3 nm) forming a plurality of pores (an average diameter = 216.4 nm).

### Comparative Example 2

A negative electrode was manufactured substantially in the same manner as in Example 2 except that the electrospinning solution of Example 2 was prepared by not including the poly(m-phenylene isophthalamide) and the LiCl salt.

The negative electrode of Comparative Example 2 included a coating layer having a thickness of 7 µm and including nanofibers (an average diameter = 145 nm) forming a plurality of pores (an average diameter = 129.5 nm).

### Evaluation Examples:

### Evaluation Example 1: Adhesive Strength

The examples and the comparative examples were measured with respect to dry adhesive strength and wet adhesive strength between negative electrode active material layer and coating layer, and the results are shown in Table 1 below.

For example, the dry adhesive strength was measured by peeling off a coating layer by 1 cm from a negative electrode fixed on a stainless steel plate, and then fixing the coating layer to an adhesive strength measurement jig of a peel tester (model name: KP-M1T-s, manufacturer: KIPAE E&T Co., Ltd.).

For example, an 1 kg load cell was used to perform an 180 ° peel strength test at a peel speed of 100 mm/min. The adhesive strength was obtained by excluding initial and late measurement sections from all the measurement sections, three times measuring adhesive strengths in the 20 mm to 40 mm-long measurement sections, and calculating their average value.

In addition, the wet adhesive strength was measured by dipping each of the negative electrodes in an electrolyte solution for 24 hours and drying the electrolyte solution, and then performing the 180° peel strength test in the same method as the dry adhesive strength-measuring method.

**Table 1:**

| | Example 1 | Example 2 | Comparative Example 1 | Comparative Example 2 |
|---|---|---|---|---|
| Dry adhesive strength of negative electrode (gf/mm) | 0.40 | 0.70 | 0.23 | 0.51 |
| Wet adhesive strength of negative electrode (gf/mm) | 0.32 | 0.57 | 0.13 | 0.32 |

Referring to Table 1 above, Example 1, which included poly(m-phenylene isophthalamide) with high heat resistance and LiCl salt, showed that the negative electrode exhibited desired or improved dry adhesive strength and wet adhesive strength, compared to the dry adhesive strength and wet adhesive strength of Comparative Example 1.

In addition, Example 2, which included poly(m-phenylene isophthalamide) with high heat resistance and LiCl salt, showed that the negative electrode exhibited desired or improved dry adhesive strength and wet adhesive strength, compared to the dry adhesive strength and wet adhesive strength of Comparative Example 2.

### Evaluation Example 2: SEM Image

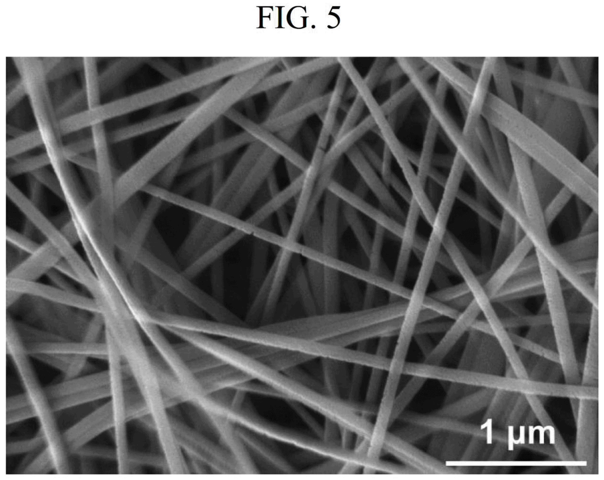

The negative electrodes of Examples 1 and 2 and Comparative Examples 1 and 2 were taken scanning electron microscope images (SEM) of on surface of each coating layer and then, shown in FIG. 5 to FIG. 8.

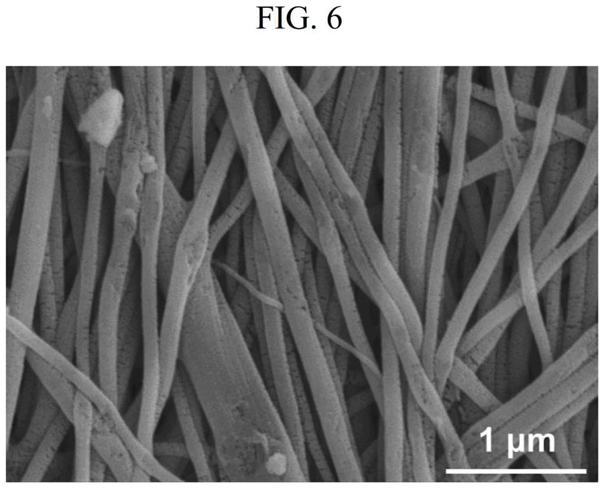

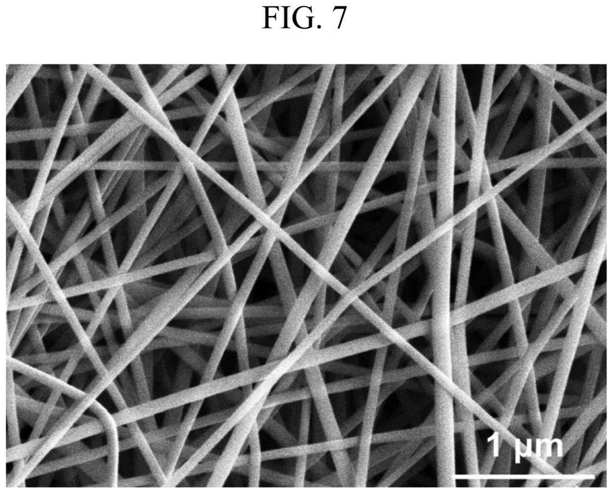

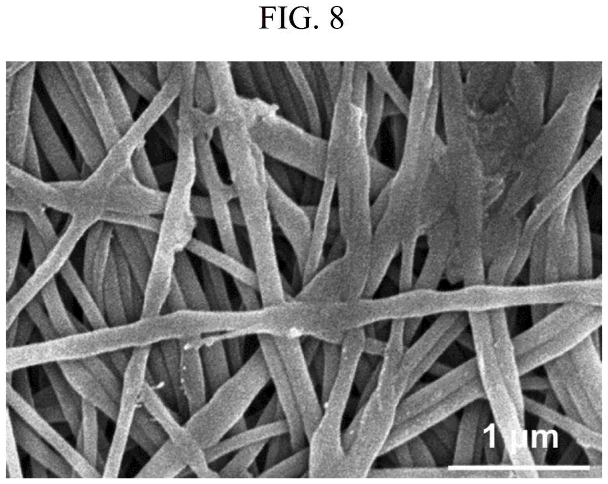

FIG. 5 is a scanning electron microscope image (SEM) of the surface of the coating layer of the negative electrode according to Example 1, FIG. 6 is a scanning electron microscope image (SEM) of the surface of the coating layer of the negative electrode according to Example 2, FIG. 7 is a scanning electron microscope image (SEM) of the surface of the coating layer of the negative electrode according to Comparative Example 1, and FIG. 8 is a scanning electron microscope image (SEM) of the surface of the coating layer of the negative electrode according to Comparative Example 2.

Referring to FIG. 5 to FIG. 8, Examples 1 and 2, which included a coating layer including an aramid-based polymer, showed that the electrospun coating layer exhibited almost no melting fusion phenomenon between nanofibers.

In addition, referring to FIG. 6 (Example 2) and FIG. 8 (Comparative Example 2), the coating layer of Example 2 exhibited electronetting, in which substantially thin fibers were additionally formed between the nanofibers, but Comparative Example 2 showed that the electrospun coating layer exhibited the melting fusion phenomenon between nanofibers.

### Evaluation Example 3: Evaluation of Properties of Coating Layer

### (1) Areal density (g/cm²) Evaluation

The coating layers of Examples and Comparative Examples were measured with respect to areal density, and then shown in Tables 2 and 3 below.

For example, the areal density was obtained by measuring a weight of three electrode specimens (1 cm x 12 cm) in total to calculate an average value of their coating layer weights excluding current collector weights and electrode active material layer weights, and then dividing the average value by an area of the specimen.

### (2) Tensile Strength Evaluation

The coating layers were respectively measured with respect to tensile strength according to ASTM D882 by using a universal testing machine (UTM). For example, the tensile strength was obtained by applying a tensile load to each of the coating layers at a tensile rate of 100 mm/min to measure a maximum load until the coating layer was destroyed, and then dividing the maximum load by an initial cross-sectional area of the sample.

Based on 100% of the tensile strength of Comparative Example 1, the tensile strength of Example 1 was calculated as a relative ratio (%), and the result is shown in Table 2 below.

Based on 100% of the tensile strength of Comparative Example 2, the tensile strength of Example 2 was calculated as a relative ratio (%), and the result is shown in Table 3 below.

### (3) Porosity

The coating layers were measured with respect to porosity in a mercury porosimetry method, and the results are shown in Tables 2 and 3 below.

### (4) Air Permeability

The coating layers were measured with respect to air permeability by using an air permeability measuring apparatus (e.g., EG01-55-1MR, Asahe Seiko Co., Ltd.) to measure time (sec) required for 100 cc of air to pass, and the results are shown in Tables 2 and 3 below.

**Table 2:**

| | Example 1 | Comparative Example 1 |
|---|---|---|
| Areal density (g/cm²) | 7.7 | 7.0 |
| Tensile strength (%) | 177.57 | 100 |
| Porosity (%) | 42.6 | 46.4 |
| Air permeability (sec/100cc) | 35 | 30 |

**Table 3:**

| | Example 2 | Comparative Example 2 |
|---|---|---|
| Areal density (g/cm²) | 10.2 | 9.7 |
| Tensile strength (%) | 188.19 | 100 |
| Porosity (%) | 38.1 | 32.2 |
| Air permeability (sec/100cc) | 100 | 100 |

Referring to Table 2 above, comparing Example 1 and Comparative Example 1, Example 1, which further included poly(m-phenylene isophthalamide) and LiCl salt, exhibited about twice higher tensile strength with almost no effect on porosity and air permeability than Comparative Example 1 and in addition, exhibited desired or improved areal density.

Referring to Table 3, comparing Example 2 and Comparative Example 2, Example 2, which further included poly(m-phenylene isophthalamide) and LiCl salt, exhibited about twice higher tensile strength with almost no effect on porosity and air permeability than Comparative Example 2 and in addition, exhibited desired or improved areal density.

### Evaluation Example 4: Evaluation of Thermal Shrinkage Rate during Electrolyte Solution Impregnation

An electrolyte solution was prepared by dissolving1.3 M LiPF₆ lithium salt in an non-aqueous organic solvent including EC/PC/EP/PP(= 15/15/25/45 in a volume ratio).

After measuring initial lengths in MD (machine direction) TD (transverse direction) directions of the coating layers of the examples and the comparative examples, the coating layers were impregnated in the prepared electrolyte solution at 150 °C for 24 hours to measure MD/TD lengths again, which were used with the initial MD/TD lengths to calculate a shrinkage rate, and the results are shown in Table 4 below.

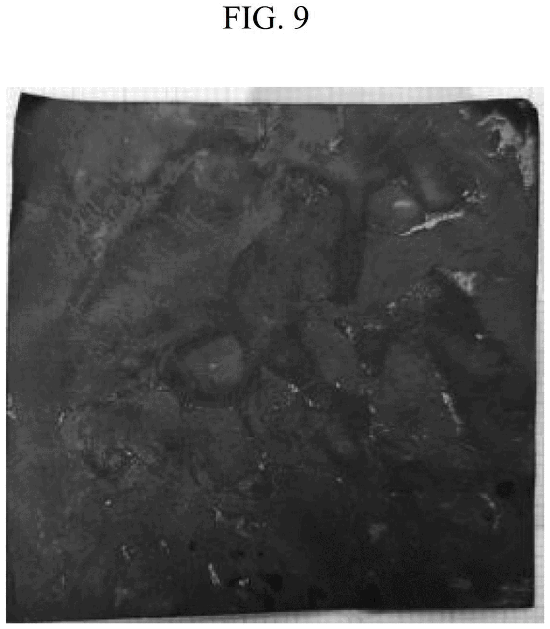

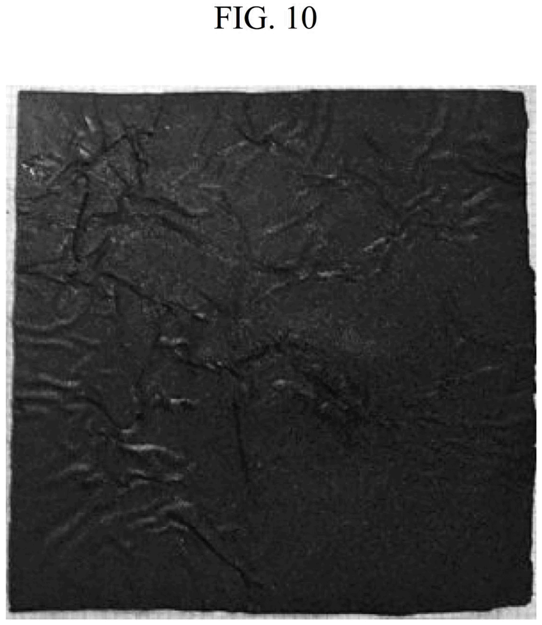

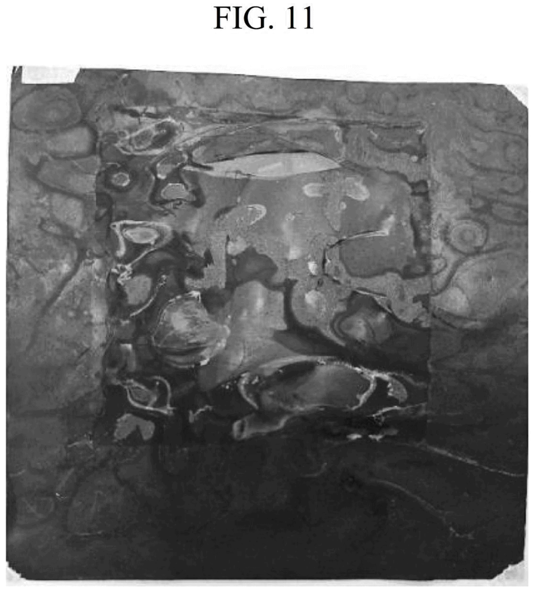

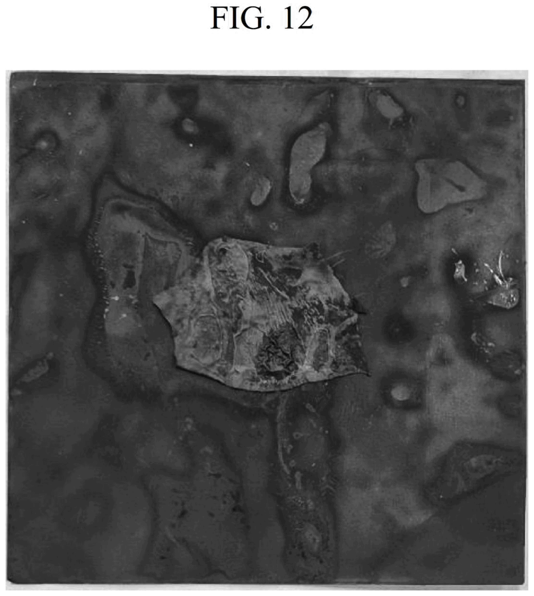

In addition, FIG. 9 to FIG. 12 show images of the coating layer samples of the Examples and the Comparative Examples, which thermal shrinkage rates during the electrolyte solution impregnation was evaluated. FIG. 9 shows the image of Example 1, FIG. 10 shows the image of Example 2, FIG. 11 shows the image of Comparative Example 1, and FIG. 12 shows the image of Comparative Example 2.

**Table 4:**

| | Example 1 | Example 2 | Comparative Example 1 | Comparative Example 2 |
|---|---|---|---|---|
| Thermal shrinkage rate (%) at 150 °C electrolyte solution impregnation (MD/TD) | 0.0/0.0 | 0.0/0.0 | 38.0/38.8 | 73.6/78.2 |

Referring to Table 4 above and FIG. 9 to FIG. 12, Examples 1 and 2, which further included poly(m-phenylene isophthalamide) and LiCl salt, exhibited substantially lower thermal shrinkage rates during the electrolyte solution impregnation at high temperatures than Comparative Examples 1 and 2.

While this disclosure has been described in connection with what is presently considered to be practical example embodiments, it is to be understood that the disclosure is not limited to the disclosed embodiments, but, on the contrary, is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. An electrode for a rechargeable lithium battery (100), the electrode comprising:
a current collector;
an electrode active material layer on the current collector; and
a coating layer on the electrode active material layer;
wherein the coating layer includes a (meth)acrylonitrile-based polymer, an aramid-based polymer, and an alkali metal salt, and
the coating layer includes nanofibers forming a plurality of pores.

2. The electrode as claimed in claim 1, wherein the coating layer is integrated with the electrode active material layer.

3. The electrode as claimed in claim 1 or 2, wherein the (meth)acrylonitrile-based polymer comprises at least one of polyacrylonitrile (PAN), polymethacrylonitrile (PMAN), an acrylonitrile-butadiene-styrene (ABS) copolymer, a methacrylonitrile-butadiene-styrene copolymer, an acrylonitrilestyrene copolymer, a methacrylonitrile-styrene copolymer, an acrylonitrileethylene copolymer (AEM), a methacrylonitrile-ethylene copolymer, an acrylonitrile-acrylate copolymer, and a methacrylonitrile-acrylate copolymer, a (meth)acrylonitrile-(meth)acrylate copolymer, and a combination thereof.

4. The electrode as claimed in any one of claims 1 to 3, wherein the (meth)acrylonitrile-based polymer is included in an amount in a range of 30 wt% to 98 wt% based on 100 wt% of the coating layer.

5. The electrode as claimed in any one of claims 1 to 4, wherein the aramid-based polymer comprises at least one of a meta-aramid-based polymer, a para-aramid-based polymer, and a combination thereof; and preferably wherein:
the meta-aramid-based polymer comprises at least one of poly(m-phenylene isophthalamide), poly(isophthaloyl chloride-co-m-phenylenediamine), poly(m-phenylene sebacamide), and a combination thereof,
the para-aramid-based polymer comprises at least one of poly(p-phenylene terephthalamide), poly(p-phenylene isophthalamide), poly(p-benzamide), and a combination thereof.

6. The electrode as claimed in any one of claims 1 to 5,
wherein the aramid-based polymer is included in an amount in a range of 1 wt% to 20 wt% based on 100 wt% of the coating layer; and/or
wherein the aramid-based polymer is included in an amount in a range of 1 part by weight to 10 parts by weight based on 100 parts by weight of the (meth)acrylonitrile-based polymer.

7. The electrode as claimed in any one of claims 1 to 6,
wherein the alkali metal salt comprises at least one of a chloride, sulfate, nitrate, carbonate, hydroxide, and a combination thereof of an alkali metal; or
wherein the alkali metal salt comprises at least one of lithium chloride, sodium chloride, potassium chloride, rubidium chloride, cesium chloride, lithium sulfate, sodium sulfate, potassium sulfate, lithium nitrate, sodium nitrate, potassium nitrate, lithium carbonate, sodium carbonate, potassium carbonate, lithium hydroxide, sodium hydroxide, potassium hydroxide, and a combination thereof.

8. The electrode as claimed in any one of claims 1 to 7,
wherein the alkali metal salt is included in an amount in a range of 0.1 wt% to 1.0 wt% based on 100 wt% of the coating layer; and/or
wherein the alkali metal salt is included in an amount in a range of 10 parts by weight to 30 parts by weight based on 100 parts by weight of the aramid-based polymer.

9. The electrode as claimed in any one of claims 1 to 8, wherein:
the coating layer further comprises a fluorine-based polymer;
the fluorine-based polymer comprises at least one of polyvinylidene fluoride (PVdF), polyvinylidene fluoride-hexafluoropropylene (PVdF-HFP), polytetrafluoroethylene (PTFE), fluorinated ethylene-propylene copolymer (FEP), ethylene-tetrafluoroethylene (ETFE), polyvinyl fluoride (PVF), and a combination thereof; and
preferably wherein a sum of amounts of the (meth)acrylonitrile-based polymer and the fluorine-based polymer is in a range of 30 wt% to 98 wt% based on 100 wt% of the coating layer.

10. The electrode as claimed in any one of claims 1 to 9, wherein the aramid-based polymer is included in an amount in a range of 1 part by weight to 10 parts by weight based on 100 parts by weight of a sum of the (meth)acrylonitrile-based polymer and the fluorine-based polymer.

11. The electrode as claimed in any one of claims 1 to 10, wherein an average diameter of the nanofibers is in a range of 50 nm to 200 nm.

12. The electrode as claimed in any one of claims 1 to 11, wherein an average particle diameter of the pores is in a range of 50 nm to 300 nm.

13. The electrode as claimed in any one of claims 1 to 12, wherein a thickness of the coating layer is in a range of 1 µm to 30 µm.

14. The electrode as claimed in any one of claims 1 to 13, wherein:
the coating layer comprises a first coating layer and a second coating layer;
the first coating layer comprises the (meth)acrylonitrile-based polymer, the aramid-based polymer, and the alkali metal salt;
the second coating layer comprises an inorganic material; and
the inorganic material comprises at least one of alumina (Al₂O₃), boehmite (aluminum oxide hydroxide), zirconia, titanium oxide (TiO₂), silica (SiO₂), and a combination thereof.

15. A rechargeable lithium battery (100), comprising:
a positive electrode (10);
a negative electrode (20); and
an electrolyte,
wherein at least one of the positive electrode (10) and the negative electrode (20) comprises the electrode as claimed in any one of claims 1 to 14.
